# EUROPEAN PATENT SPECIFICATION

(11) **EP 4 227 628 B1**
(45) Date of publication and mention of the grant of the patent: **18.11.2026**
(21) Application number: 23163847.9
(22) Date of filing: 31.08.2016
(51) Int. Cl.: F28D 20/02, A47G 1/00, A47G 11/00, F24D 19/00, F24D 3/16, C09K 5/00

(54) **MODULAR AND PORTABLE FIXTURES CONTAINING A PHASE CHANGE MATERIAL**
MODULARE UND TRAGBARE BEFESTIGUNGEN MIT EINEM PHASENWECHSELMATERIAL
ACCESSOIRES MODULAIRES ET PORTATIFS CONTENANT UN MATÉRIAU À CHANGEMENT DE PHASE

(30) Priority: 31.08.2015 US 201562212054 P
(43) Date of publication of application: 16.08.2023
(62) Document number(s) of the earlier application(s) in accordance with Art. 76 EPC: 16777819.0 / 3 344 940
(73) Proprietor: Phase Change Energy Solutions, Inc., Asheboro NC North Carolina 27203 (US)
(72) Inventor: SAWAFTA, Reyad, I., Greensboro (US); SAWAFTA, Furat, Greensboro (US)
(74) Representative: Appleyard Lees IP LLP

(56) References cited:
- EP-A2- 2 781 842
- WO-A1-03/064931
- DE-A1- 2 503 506
- JP-A- H07 293 908
- US-A- 5 755 216
- US-A1- 2004 170 806
- US-A1- 2005 055 982
- US-A1- 2011 292 488

## Description

### FIELD

The present disclosure relates to methods of managing the temperature of a room using fixtures containing a phase change material (PCM).

### BACKGROUND

In recent years, homeowners and business owners have sought to reduce energy consumption and costs associated with managing or maintaining the temperature of a building or room. Various energy-saving devices and systems have been implemented for this purpose. However, many existing devices and systems suffer from one or more disadvantages. For example, some devices and systems address only the thermal insulation of a room or building from outdoor temperatures. In addition, many devices and systems require permanent and/or expensive installation within a room or building. As a result, many existing devices and systems fail to provide rapid recouping of their initial cost and/or require substantial retrofitting or refurbishment of the room or building in which they are used. The high cost and/or effort of installing some previous devices and systems can also hinder the widespread adoption of such devices and systems in homes and businesses. Improved systems and methods for managing the temperature of a room or building are therefore desired.

DE2503506 discloses a room boundary wall with increased heat storage capacity, which has at least one heat-insulating layer and at least one heat-storing layer containing a liquid.

### SUMMARY

According to the present invention, there is provided a method of managing the temperature of a room according to claim 1. Preferred embodiments of the invention are given in the dependent claims 2-14. Also disclosed are modular and portable fixtures containing or comprising a PCM. Such fixtures, in some cases, can provide one or more advantages compared to some existing fixtures. In some embodiments, for example, a fixture described herein can provide decoration to a room or space while also helping to maintain a desired temperature of the room or space and/or while reducing the energy used by a heating, ventilating, and air conditioning (HVAC) system of the space or room. Additionally, in some instances, a fixture described herein is modular, portable, and/or removable, such that it can be readily removed from a space or room and/or moved to another space or room or to another location within a space or room, including without the need for complex or time-consuming installation or de-installation of the fixture.

Fixtures described herein comprise or contain one or more PCMs. In some cases, a fixture described herein is a decorative fixture, such as a piece of artwork. Further, in some such instances, the fixture comprises a frame and the PCM is disposed within a cavity defined by the frame or within an interior of a periphery defined by the frame. Moreover, the fixture can have a front side and a back side. In some cases, the PCM of the fixture is disposed on the back side of the fixture, and the front side of the fixture is decorative. For example, in some instances, the fixture is a framed piece of artwork having a PCM disposed behind the frame or within the frame. A fixture described herein may also be an item of furniture or a portion of an item of furniture, such as a bed or portion of a bed. In some embodiments, a fixture described herein is a mirror such as a large bathroom mirror. A fixture described herein may also be a smart board, chalk board, white board, or other board disposed in a school, classroom, or conference room. Additionally, in some cases, a fixture described herein comprises informational content. For example, in some embodiments, a fixture described herein can be a banner or display board, such as a banner or display board comprising menu information and/or an advertisement. Further, in some cases, a fixture described herein is a load bar or piece of molding disposed on the wall of a room. A fixture described herein can also be hung or suspended from the ceiling of a room, including to provide a decorative effect. Moreover, in some embodiments, a fixture described herein provides structure or subdivision to a room. For instance, in some cases, a fixture can form at least a portion of a cubicle or workstation wall or division within a room. A fixture described herein may also form at least a portion of a ceiling tile, such as a drop ceiling tile. Additionally, in some instances, a fixture described herein comprises or forms an acoustic tile or part of an acoustic tile.

Methods of managing the temperature of a space or room are described herein. Such methods can provide one or more advantages compared to some other methods of managing the temperature of a space or room. For instance, in some cases, methods described herein can reduce the number of HVAC heating or cooling cycles necessary to maintain a temperature within a predetermined or desired range. Further, in some embodiments, methods described herein can reduce energy expenditures required to run an HVAC system to manage the temperature of a room.

In some implementations, a method of managing the temperature of a room comprises disposing a fixture in an interior of the room, wherein the fixture comprises or contains a PCM. In addition, the fixture can be disposed within the room in any manner not inconsistent with the objectives of the present disclosure. For example, the fixture can hang from (and/or be incorporated into) a wall of the room or be suspended from (and/or be incorporated into) a ceiling of the room. A fixture described herein may also be placed on a floor of the room. Additionally, as described above, the fixture can be decorative, and may comprise or include a piece of artwork. In certain other embodiments, the fixture is an item of furniture or a portion of an item of furniture. The fixture may also be a load bar or piece of molding. Further, in some cases, the fixture forms a portion of a structural component of the room. For instance, in some embodiments, the fixture forms a portion of an interior wall or ceiling such as a drop ceiling. A method described herein can further comprise changing the phase of the PCM from a first phase to a second phase by exposing the PCM to a temperature in the room above or below a phase change temperature of the PCM. Additionally, in some instances, the method can further comprise reverting or returning the PCM to the first phase. Reverting the PCM to the first phase, in some embodiments, comprises cooling or heating the room with an HVAC system. In certain other embodiments, reverting the PCM to the first phase comprises cooling or heating the room naturally, such as by exposing the room to the outdoors or to a day-night cycle. Heating or cooling the room in this manner can revert the PCM to the first phase by causing the PCM to absorb thermal energy from the room or release thermal energy to the room as part of a phase transition of the PCM back to the first phase from the second phase.

These and other implementations are described in more detail in the detailed description which follows.

### BRIEF DESCRIPTION OF THE FIGURES

Figure 1 illustrates a perspective view of the back of a fixture according to one embodiment described herein.
Figure 2 illustrates a perspective view of the back of a fixture according to one embodiment described herein.
Figure 3 illustrates front and back views of a fixture according to one embodiment described herein.
Figure 4 illustrates a top plan view of a comparative room configuration.
Figure 5 illustrates a top plan view of a room including fixtures according to one embodiment of a method described herein.
Figure 6 illustrates a top plan view of a room including fixtures according to one embodiment of a method described herein.
Figure 7 illustrates test results for some embodiments of a method described herein.
Figure 8 illustrates test results for some embodiments of a method described herein.
Figure 9 illustrates test results for some embodiments of a method described herein.
Figure 10 illustrates test results for some embodiments of a method described herein.
Figure 11 illustrates test results for some embodiments of a method described herein.
Figure 12 illustrates test results for some embodiments of a method described herein.

### DETAILED DESCRIPTION

Implementations described herein can be understood more readily by reference to the following detailed description, examples, and drawings.

In addition, all ranges disclosed herein are to be understood to encompass any and all subranges subsumed therein. For example, a stated range of "1.0 to 10.0" should be considered to include any and all subranges beginning with a minimum of 1.0 or more and ending with a maximum value of 10.0 or less, e.g., 1.0 to 5.3, or 4.7 to 10.0, or 3.6 to 7.9.

All ranges disclosed herein are also to be considered to include the end points of the range, unless expressly stated otherwise. For example, a range of "between 5 and 10," "from 5 to 10," or "5-10" should generally be considered to include the end points of 5 and 10.

Fixtures comprising one or more PCMs are described herein. Methods of managing the temperature of a room are described herein, wherein the room has a wall and a ceiling and wherein the methods comprise disposing a fixture described herein in an interior of the room.

Turning now to specific components and steps of fixtures and methods described herein, a fixture described herein comprises one or more PCMs. Any PCM not inconsistent with the objectives of the present invention can be used. Further, a PCM in a fixture utilized in a method described herein can either absorb or release energy using any phase transition not inconsistent with the objectives of the present disclosure. For example, the phase transition of a PCM described herein, in some embodiments, comprises a transition between a solid phase and a liquid phase of the PCM, or between a solid phase and a mesophase of the PCM. A mesophase, in some cases, is a gel phase. Thus, in some instances, a PCM undergoes a solid-to-gel transition. In some embodiments, the gel of a solid-to-gel transition does not comprise a continuous liquid phase. Further, in some cases, the gel of a solid-to-gel transition does not comprise water or is substantially free of water. Moreover, in other instances, the solid-to-gel transition of a PCM described herein does not comprise a formal phase change. In some embodiments, for example, the solid-to-gel transition is a transition in viscosity from a high viscosity to a low viscosity. The high viscosity comprises a viscosity of at least about 25,000 mPa.s (25,000 centipoise (cP)) when measured according to ASTM standard D2983. The low viscosity comprises a viscosity of about 20,000 mPa.s (20,000 cP) or less when measured according to ASTM standard D2983. Further, in some embodiments, the low viscosity comprises a viscosity between about 200 mPa.s (200 cP) and about 20,000 mPa.s (20,000 cP), a viscosity between about 200 mPa.s (200 cP) and about 10,000 mPa.s (10,000 cP), between about 1,000 mPa.s (1000 cP) and about 15,000 mPa.s (15,000 cP), or between about 1,000 mPa.s (1000 cP) and about 5,000 mPa.s (5000 cP). Moreover, in some cases, the solid-to-gel transition of a PCM described herein comprises a transition from a rigid solid state to a flexible solid state of the PCM. In some instances, the rigid solid state comprises an amorphous solid state. Alternatively, in other embodiments, the rigid solid state comprises a crystalline solid state. The flexible solid state, in some cases, comprises an amorphous state. In other embodiments, the flexible solid state comprises a crystalline state. Further, a PCM in a rigid solid state, in some instances, has a viscosity of about 25,000 mPa.s (25,000 cP) or more when measured according to ASTM standard D2983. In contrast, a PCM in a flexible solid state, in some embodiments, has a viscosity of about 20,000 mPa.s (20,000 cP) or less when measured according to ASTM standard D2983. In some cases, a PCM in a flexible solid state has a viscosity between about 200 mPa.s (200 cP) and about 20,000 mPa.s (20,000 cP), between about 200 mPa.s (200 cP) and about 10,000 mPa.s (10,000 cP), between about 1,000 mPa.s (1000 cP) and about 15,000 mPa.s (15,000 cP), or between about 1,000 mPa.s (1000 cP) and about 5,000 mPa.s (5000 cP) when measured according to ASTM standard D2983.

In addition, a PCM of a fixture described herein can have any phase transition temperature not inconsistent with the objectives of the present disclosure. A phase transition temperature of a PCM or mixture of PCMs, in some embodiments, is between about -50°C and about 90°C at 0.1 mPa (1 atm), between about -20°C and about 90°C at 0.1 mPa (1 atm), or between about -20°C and about 80°C at 0.1 mPa (1 atm). In some cases, a phase transition temperature is between about -50°C and about 0°C at 0.1 mPa (1 atm) or between about -20°C and about 0°C at 0.1 mPa (1 atm). In some instances, a phase transition temperature is between about 0°C and about 20°C at 0.1 mPa (1 atm) or between about 0°C and about 10°C at 0.1 mPa (1 atm). In some embodiments, a phase transition temperature is between about 5°C and about 10°C at 0.1 mPa (1 atm). In other cases, a phase transition temperature is between about 30°C and about 90°C at 0.1 mPa (1 atm) or between about 50°C and about 70°C at 0.1 mPa (1 atm). In some embodiments, a phase transition temperature is between about 55°C and about 65°C at 0.1 mPa (1 atm).

Moreover, in some cases, a PCM or mixture of PCMs is selected to provide a phase transition temperature selectively adapted for heating or cooling applications. The phase transition temperature is at or near a desired set-point temperature in an interior of the room. Any desired room temperature and associated phase transition temperature can be used. For example, in some embodiments, a phase transition temperature is between about 15°C and about 32°C at 0.1 mPa (1 atm), such as between about 17°C and about 30°C at 0.1 mPa (1 atm), between about 19°C and about 28°C, or between about 21°C and about 26°C at 0.1 mPa (1 atm). Further, in some cases, a phase transition temperature is between about 17°C and about 32°C at 0.1 mPa (1 atm), such as between about 19°C and about 32°C at 0.1 mPa (1 atm), between about 21°C and about 32°C at 0.1 mPa (1 atm), between about 23°C and about 32°C at 0.1 mPa (1 atm), or between about 25°C and about 32°C at 0.1 mPa (1 atm). Moreover, in some embodiments, a phase transition temperature is between about 15°C and about 30°C at 0.1 mPa (1 atm), such as between about 15°C and about 28°C at 0.1 mPa (1 atm), between about 15°C and about 26°C at 0.1 mPa (1 atm), or between about 15°C and about 24°C at 0.1 mPa (1 atm).

Moreover, in some cases, a PCM or mixture of PCMs has a phase transition enthalpy of at least about 50 kJ/kg or at least about 100 kJ/kg. In other embodiments, a PCM or mixture of PCMs has a phase transition enthalpy of at least about 150 kJ/kg, at least about 200 kJ/kg, at least about 300 kJ/kg, or at least about 350 kJ/kg. In some instances, a PCM or mixture of PCMs has a phase transition enthalpy between about 50 kJ/kg and about 350 kJ/kg, between about 100 kJ/kg and about 350 kJ/kg, between about 100 kJ/kg and about 220 kJ/kg, or between about 100 kJ/kg and about 250 kJ/kg.

In addition, a PCM of a fixture described herein can have any composition not inconsistent with the objectives of the present disclosure. In some embodiments, for instance, a PCM comprises an inorganic composition. In other cases, a PCM comprises an organic composition. In some instances, a PCM comprises a salt hydrate. Suitable salt hydrates include, without limitation, CaCl₂ • 6H₂O, Ca(NO₃)₂ • 3H₂O, NaSO₄ • 10H₂O, Na(NO₃)₂ • 6H₂O, Zn(NO₃)₂ • 2H₂O, FeCl₃ • 2H₂O, Co(NO₃)₂ • 6H₂O, Ni(NO₃)₂ • 6H₂O, MnCl₂ • 4H₂O, CH₃COONa • 3H₂O, LiC₂H₃O₂ • 2H₂O, MgCl₂ • 4H₂O, NaOH • H₂O, Cd(NO₃)₂ • 4H₂O, Cd(NO₃)₂ • 1H₂O, Fe(NO₃)₂ • 6H₂O, NaAl(SO₄)₂ • 12H₂O, FeSO₄ • 7H₂O, Na₃PO₄ • 12H₂O, Na₂B₄O₇• 10H₂O, Na₃PO₄ • 12H₂O, LiCH₃COO • 2H₂O, and/or mixtures thereof.

In other embodiments, a PCM comprises a fatty acid. A fatty acid, in some embodiments, can have a C4 to C28 aliphatic hydrocarbon tail. Further, in some embodiments, the hydrocarbon tail is saturated. Alternatively, in other embodiments, the hydrocarbon tail is unsaturated. In some embodiments, the hydrocarbon tail can be branched or linear. Non-limiting examples of fatty acids suitable for use in some embodiments described herein include caprylic acid, capric acid, lauric acid, myristic acid, palmitic acid, stearic acid, arachidic acid, behenic acid, lignoceric acid, and cerotic acid. In some embodiments, a PCM described herein comprises a combination, mixture, or plurality of differing fatty acids.

In some embodiments, a PCM comprises an alkyl ester of a fatty acid. Any alkyl ester not inconsistent with the objectives of the present disclosure may be used. For instance, in some embodiments, an alkyl ester comprises a methyl ester, ethyl ester, isopropyl ester, butyl ester, or hexyl ester of a fatty acid described herein. In other embodiments, an alkyl ester comprises a C2 to C6 ester alkyl backbone or a C6 to C12 ester alkyl backbone. In some embodiments, an alkyl ester comprises a C12 to C28 ester alkyl backbone. Further, in some embodiments, a PCM comprises a combination, mixture, or plurality of differing alkyl esters of fatty acids. Non-limiting examples of alkyl esters of fatty acids suitable for use in some embodiments described herein include methyl laurate, methyl myristate, methyl palmitate, methyl stearate, methyl palmitoleate, methyl oleate, methyl linoleate, methyl docosahexanoate, methyl ecosapentanoate, ethyl laurate, ethyl myristate, ethyl palmitate, ethyl stearate, ethyl palmitoleate, ethyl oleate, ethyl linoleate, ethyl docosahexanoate, ethyl ecosapentanoate, isopropyl laurate, isopropyl myristate, isopropyl palmitate, isopropyl stearate, isopropyl palmitoleate, isopropyl oleate, isopropyl linoleate, isopropyl docosahexanoate, isopropyl ecosapentanoate, butyl laurate, butyl myristate, butyl palmitate, butyl stearate, butyl palmitoleate, butyl oleate, butyl linoleate, butyl docosahexanoate, butyl ecosapentanoate, hexyl laurate, hexyl myristate, hexyl palmitate, hexyl stearate, hexyl palmitoleate, hexyl oleate, hexyl linoleate, hexyl docosahexanoate, and hexyl ecosapentanoate.

In some embodiments, a PCM comprises a fatty alcohol. Any fatty alcohol not inconsistent with the objectives of the present disclosure may be used. For instance, a fatty alcohol, in some embodiments, can have a C4 to C28 aliphatic hydrocarbon tail. Further, in some embodiments, the hydrocarbon tail is saturated. Alternatively, in other embodiments, the hydrocarbon tail is unsaturated. The hydrocarbon tail can also be branched or linear. Non-limiting examples of fatty alcohols suitable for use in some embodiments described herein include capryl alcohol, pelargonic alcohol, capric alcohol, undecyl alcohol, lauryl alcohol, tridecyl alcohol, myristyl alcohol, pentadecyl alcohol, cetyl alcohol, heptadecyl alcohol, stearyl alcohol, nonadecyl alcohol, arachidyl alcohol, heneicosyl alcohol, behenyl alcohol, lignoceryl alcohol, ceryl alcohol, and montanyl alcohol. In some embodiments, a PCM comprises a combination, mixture, or plurality of differing fatty alcohols.

In some embodiments, a PCM comprises a fatty carbonate ester, sulfonate, or phosphonate. Any fatty carbonate ester, sulfonate, or phosphonate not inconsistent with the objectives of the present disclosure may be used. In some embodiments, a PCM comprises a C4 to C28 alkyl carbonate ester, sulfonate, or phosphonate. In some embodiments, a PCM comprises a C4 to C28 alkenyl carbonate ester, sulfonate, or phosphonate. In some embodiments, a PCM comprises a combination, mixture, or plurality of differing fatty carbonate esters, sulfonates, or phosphonates. In addition, a fatty carbonate ester described herein can have two alkyl or alkenyl groups described herein or only one alkyl or alkenyl group described herein.

Moreover, in some embodiments, a PCM comprises a paraffin. Any paraffin not inconsistent with the objectives of the present disclosure may be used. In some embodiments, a PCM comprises n-dodecane, n-tridecane, n-tetradecane, n-pentadecane, n-hexadecane, n-heptadecane, n-octadecane, n-nonadecane, n-eicosane, n-heneicosane, n-docosane, n-tricosane, n-tetracosane, n-pentacosane, n-hexacosane, n-heptacosane, n-octacosane, n-nonacosane, n-triacontane, n-hentriacontane, n-dotriacontane, n-tritriacontane, and/or mixtures thereof.

In addition, in some embodiments, a PCM comprises a polymeric material. Any polymeric material not inconsistent with the objectives of the present disclosure may be used. Non-limiting examples of suitable polymeric materials for use in some embodiments described herein include thermoplastic polymers (e.g., poly(vinyl ethyl ether), poly(vinyl n-butyl ether) and polychloroprene), polyethylene glycols (e.g., CARBOWAX^{®} polyethylene glycol 400, CARBOWAX^{®} polyethylene glycol 600, CARBOWAX^{®} polyethylene glycol 1000, CARBOWAX^{®} polyethylene glycol 1500, CARBOWAX^{®} polyethylene glycol 4600, CARBOWAX^{®} polyethylene glycol 8000, and CARBOWAX^{®} polyethylene glycol 14,000), and polyolefins (e.g., lightly crosslinked polyethylene and/or high density polyethylene).

Additional non-limiting examples of phase change materials suitable for use in some embodiments described herein include BioPCM materials commercially available from Phase Change Energy Solutions (Asheboro, North Carolina), such as BioPCM-(-8), BioPCM-(-6), BioPCM-(-4), BioPCM-(-2), BioPCM-4, BioPCM-6, BioPCM 08, BioPCM-Q12, BioPCM-Q15, BioPCM-Q18, BioPCM-Q20, BioPCM-Q21, BioPCM-Q23, BioPCM-Q25, BioPCM-Q27, BioPCM-Q30, BioPCM-Q32, BioPCM-Q35, BioPCM-Q37, BioPCM-Q42, BioPCM-Q49, BioPCM-55, BioPCM-60, BioPCM-62, BioPCM-65, BioPCM-69, and others.

It is further to be understood that a fixture utilized in a method described herein can comprise a plurality of differing PCMs, including differing PCMs of differing types. Any mixture or combination of differing PCMs not inconsistent with the objectives of the present disclosure may be used. In some embodiments, for example, a fixture comprises one or more fatty acids and one or more fatty alcohols. Further, as described above, a plurality of differing PCMs, in some cases, is selected based on a desired phase transition temperature and/or latent heat of the mixture of PCMs.

Further, in some embodiments, one or more properties of a PCM described herein can be modified by the inclusion of one or more additives. Such an additive described herein can be mixed with a PCM and/or disposed in a fixture described herein. In some embodiments, an additive comprises a thermal conductivity modulator. A thermal conductivity modulator, in some embodiments, increases the thermal conductivity of the PCM. In some embodiments, a thermal conductivity modulator comprises carbon, including graphitic carbon. In some embodiments, a thermal conductivity modulator comprises carbon black and/or carbon nanoparticles. Carbon nanoparticles, in some embodiments, comprise carbon nanotubes and/or fullerenes. In some embodiments, a thermal conductivity modulator comprises a graphitic matrix structure. In other embodiments, a thermal conductivity modulator comprises an ionic liquid. In some embodiments, a thermal conductivity modulator comprises a metal, including a pure metal or a combination, mixture, or alloy of metals. Any metal not inconsistent with the objectives of the present disclosure may be used. In some embodiments, a metal comprises a transition metal, such as silver or copper. In some embodiments, a metal comprises an element from Group 13 or Group 14 of the periodic table. In some embodiments, a metal comprises aluminum. In some embodiments, a thermal conductivity modulator comprises a metallic filler dispersed within a matrix formed by the PCM. In some embodiments, a thermal conductivity modulator comprises a metal matrix structure or cage-like structure, a metal tube, a metal plate, and/or metal shavings. Further, in some embodiments, a thermal conductivity modulator comprises a metal oxide. Any metal oxide not inconsistent with the objectives of the present disclosure may be used. In some embodiments, a metal oxide comprises a transition metal oxide. In some embodiments, a metal oxide comprises alumina.

In other embodiments, an additive comprises a nucleating agent. A nucleating agent, in some embodiments, can help avoid subcooling, particularly for PCMs comprising finely distributed phases, such as fatty alcohols, paraffinic alcohols, amines, and paraffins. Any nucleating agent not inconsistent with the objectives of the present disclosure may be used.

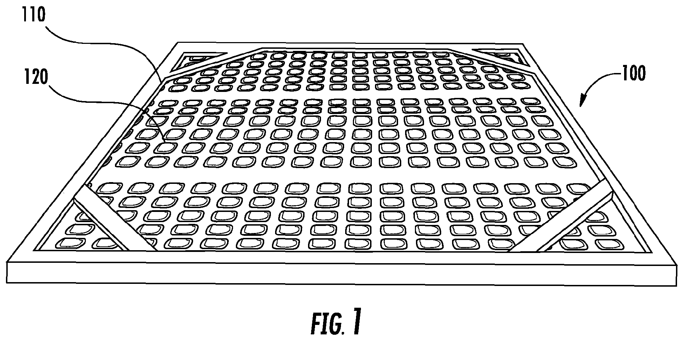

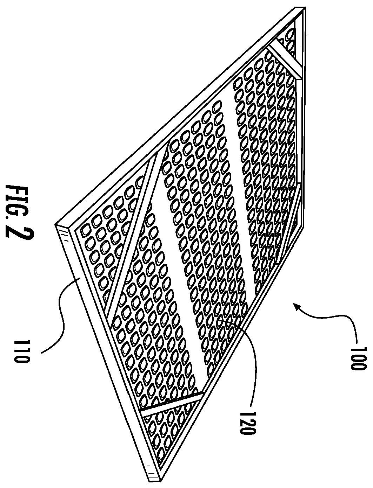

Turning now to specific properties or characteristics of the fixture comprising one or more PCMs, the fixture can be decorative or non-decorative. The fixture may also convey information or other content. For example, in some instances, the fixture comprises an advertisement, which may include images and/or text. In some cases, the fixture comprises a menu board or other informational board or banner. Additionally, in some embodiments, a fixture is decorative. For example, the fixture can be a piece of artwork, such as a picture, a painting, a print, sculpture or other piece of artwork. Moreover, a fixture can have decorative and/or other components disposed on or within the fixture in any configuration not inconsistent with the objectives of the present disclosure. For example, in some embodiments, the fixture can comprise a frame, and phase change material can be disposed on or within an area defined by the frame. In some embodiments, the fixture comprises a frame and the PCM is disposed on an exterior surface of the frame. Further, in some embodiments wherein the fixture comprises a frame, the phase change material is disposed within a cavity defined by the frame. In such embodiments, the frame can be hollow or substantially hollow, with the PCM being located within the frame. Moreover, in some embodiments, a frame of the fixture can define a periphery of any shape, such as a circular, oblong or polygonal shape, and the PCM can be disposed within an interior of the periphery. Figures 1 and 2 illustrate embodiments wherein the fixture (100) comprises a frame (110) defining a periphery (which may also be denoted as 110) and the PCM (120) is disposed within the periphery of the frame (110).

Additionally, in some embodiments, a fixture described herein can have a front side and a back side, and certain components or portions of the fixture can be selectively disposed on the front side or the back side. For example, in some embodiments, as illustrated in Figures 1 and 2, the fixture (100) has a front side (not visible) and a back side (visible in Figures 1 and 2), and the PCM (120) is located or disposed on the back side of the fixture (100). In such embodiments, the front side can be a decorative side. As described previously, the decorative side of a fixture can be a painting, print, poster, or the like.

Moreover, in some embodiments, the fixture may be adapted or configured to permit or facilitate heat exchange back and forth between the PCM and the interior of the room in which the fixture is disposed. Any configuration or architecture operable to provide such function can be used. For example, in some embodiments, the front side of the fixture comprises, includes, or is formed from a thermal exchange material or a thermally conductive material. Any material operable to permit thermal exchange from the front of the fixture to the back of the fixture and from the back of the fixture to the front of the fixture can be used. For example, in some cases, the front side of the fixture comprises, includes, or is formed from a metal such as aluminum or copper. Moreover, in some instances, the front side of the fixture is formed from a metal, and the metal is etched or printed or infused with one or more colorants to produce text and/or an image on the metal front side itself. Additionally, in some embodiments, the thermal exchange material or thermally conductive material of a front side of a fixture described herein can comprise or consist of a layer of thermally conductive material, including a thin layer of thermally conductive material. Further, in some cases, the thermally conductive material can be dispersed within a non-thermally conductive material or within a less thermally conductive material. In some embodiments, for example, a thermally conductive material comprises a paint, ink, or pigment, or a metal dispersed in a paint, ink, or pigment. Moreover, the paint, ink, or pigment can be used to form an artwork or decorative feature of the fixture. Such a use of thermally conductive paint, ink, or pigment may be especially useful if the front of the fixture is formed of a non-breathable material. It is also possible for the front side (or other portion) of a fixture described herein to be formed from a material that is non-thermally conductive and/or non-electrically conductive. The use of a non-conductive material to form a front side (or other portion) of a fixture described herein may be especially desirable, for example, if the fixture is placed in a room in which sensitive and/or expensive electronic devices are used, such as a telecommunications data room or data center in which computer systems and associated components are housed.

Additionally, in some embodiments, the front side of the fixture can comprise or be formed from a breathable material. A "breathable" material, for reference purposes herein, can refer to a material that is permeable to air and/or water vapor under ambient conditions, such as under a pressure of 1 atm. Not intending to be bound by theory, it is believed that air or water vapor passing back and forth across the front side of the fixture can permit heat exchange between the interior of the room and the PCM disposed on the back of the fixture. Any breathable material can be used in such a fixture. For example, the breathable material can be a fabric, leather, mesh, paper, or combination thereof. Moreover, a breathable material can be formed of a natural material or substrate or a synthetic material or substrate, including a natural or synthetic fabric, leather, mesh, or paper. A breathable material may also be formed from a metal. In some such instances, the breathable material comprises, consists, or consists essentially of a metal mesh or a perforated metal, such as an aluminum mesh or perforated aluminum.

Moreover, in some cases, the front side (or other portion) of a fixture described herein comprises or is formed from a non-flammable or non-combustible material. In some embodiments, for instance, such a material complies with the standard ASTM E 136 for non-combustible building materials and/or has a flammability rating of 0 or 1 in the National Fire Protection Associated (NAFPA) hazard rating system. Any non-flammable or non-combustible material can be used in a fixture described herein. For example, in some embodiments, a non-flammable or non-combustible material comprises glass, metal, or a non-flammable or non-combustible organic polymer. In some cases, a non-flammable or non-combustible material comprises a fire-resistant or fire-retardant textile or fabric, such as a polyester textile or fabric or a glass fiber textile or fabric.

Further, in some embodiments, a fixture described herein comprises a spacer that defines an air flow channel that permits air flow from the interior of the room to the PCM and from the PCM to the interior of the room. A spacer can take any form or have any architecture or configuration not inconsistent with the objectives of the present disclosure. For example, in an embodiment wherein the fixture is a painting, mirror, or other wall hanging, a bar-shaped or block-shaped spacer along a periphery of the fixture can permit air flow between the PCM and an interior of the room. The air flow channel defined by the spacer can have any dimensions not inconsistent with the objectives of the present disclosure. For example, the air flow channel can have a width of less than about 15.24 cm (6 inches), such as between about 1.27 cm (0.5 inches) and about 15.24 cm (6 inches), between about 1.27 cm (0.5 inches) and about 12.7 cm (5 inches), between about 0.27 cm (0.5 inches) and about 10.16 cm (4 inches), between about 1.27 cm (0.5 inches) and about 7.62 cm (3 inches), or between about 1.27 cm (0.5 inches) and about 5.08 cm (2 inches). Further, in some embodiments, a width of the air flow channel defined by the spacer is between about 2.54 cm (1 inch) and about 15.24 cm (6 inches), between about 5.08 cm (2 inches) and about 15.24 cm (6 inches), or between about 7.62 cm (3 inches) and about 15.24 cm (6 inches). The air flow channel can be disposed along a top portion, bottom portion, or side portion of the fixture. In some embodiments, multiple spacers may be utilized to provide one or more air flow channels along a combination of the top portion, bottom portion, and/or side portion of the fixture. Further, in some embodiments, a fixture can define at least one vent hole in combination with or instead of a spacer to define an air flow channel that permits air flow from the interior of the room to the PCM and from the PCM to the interior of the room. Such a vent hole can have any dimensions not inconsistent with the objectives of the present disclosure. For example, a vent hole can have dimensions consistent with those provided herein above for a width dimension of the air flow channel. In embodiments wherein the fixture has one or more of a width dimension or a length dimension on the order of several feet or more, a vent hole can further define an air flow channel having a length or a width between about 15.24 cm (6 inches) and about 30.48 cm (12 inches), such as between about 17.78 cm (7 inches) and about 30.48 cm (12 inches), between about 20.32 cm (8 inches) and about 30.48 cm (12 inches), between about 15.24 cm (6 inches) and about 27.94 cm (11 inches) or between about 15.24 cm (6 inches) and about 25.4 cm (10 inches). Other dimensions are also possible, such as between about 15.24 cm (6 inches) and about 45.72 cm (18 inches), between about 20.32 cm (8 inches) and about 50.8 cm (20 inches), or between about 30.48 cm (12 inches) and about 60.96 cm (24 inches). Moreover, an air flow channel and/or vent hole described herein can be partially defined by a ceiling, wall, or other component of a room in which the fixture is disposed. In other words, a spacer described herein, in some cases, provides or creates an air flow channel adjacent to a surface of a ceiling, wall, or other component of a room when the fixture is disposed on or near the ceiling, wall, or other component of the room.

A fixture described herein can also comprise or include one or more additional components that may either facilitate the temperature management function or may provide auxiliary function. For example, in some embodiments, the fixture comprises at least one fan that directs air flow from an interior of the room to the phase change material and/or from the phase change material to the interior of the room. In some cases, the fixture comprises a plurality of fans. In some such instances, a fixture can comprise a first fan (or plurality of fans) that rotates in a clockwise direction and a second fan (or plurality of fans) that rotates in a counterclockwise direction. Moreover, the first and second fans (or pluralities of fans) can be positioned in or on the fixture to direct air flow cooperatively from the interior of the room to the phase change material and from the phase change material back to the interior of the room. Further, in some embodiments, a fixture described herein can comprise or include one or more light sources such as a night light or a safety light. Moreover, the fixture may comprise or include a means by which to power the light source(s) and/or the fan(s). For example, the fixture can comprise or include a photovoltaic cell that powers the fan(s) and/or the light source(s). Such a photovoltaic cell may be placed on an exterior surface of the fixture, and may be a rigid or flexible photovoltaic cell. In other embodiments, the fan(s) are thermoelectrically powered. Moreover, in some cases, a thermoelectric fan of a fixture described herein uses thermal energy provided by or emanating from the fixture or by a heat source within the room or by "excess" ambient heat within the room. In this manner, such a thermoelectric fan can further assist with the efficient temperature management of the room, particularly for cooling applications. Any combination or sub-combination of one or more fans, one or more light sources, and one or more power sources such as a photovoltaic cell can be used.

Moreover, in some embodiments, the fixture is an item of furniture or a portion of an item of furniture. Any item of furniture can be used. For example, the fixture can be at least a portion of any household item of furniture or any item of furniture which may be disposed within a hotel room, other residential environment, or office environment, such as a data center. In some embodiments, the fixture is at least a portion of a dresser, wardrobe, night stand, shelf, desk, TV stand, bed, lamp, and/or a chair. For example, in some embodiments, the fixture is a bed or a portion of a bed, such as a headboard or a bed frame. Additionally, the fixture can be a stand, base or other support feature of an item of furniture such as a lamp. In some embodiments, the fixture is a mirror or comprises a mirror such as a bathroom mirror.

Further, in some cases, a fixture described herein comprises informational content. For example, in some embodiments, a fixture described herein can be a banner or display board, such as a banner or display board comprising menu information, daily special information, and/or an advertisement. In some instances, the fixture is a smart board, chalk board, white board, or other board disposed in a school, classroom, or conference room.

Moreover, in some embodiments, a fixture described herein provides structure or subdivision to a room. For instance, in some cases, a fixture can form at least a portion of a cubicle or workstation wall or division within a room. Further, it is also possible for a fixture described herein to be attached to and/or hung from a wall of a cubicle or workstation, wherein the wall of the cubicle or workstation is not itself a fixture described herein.

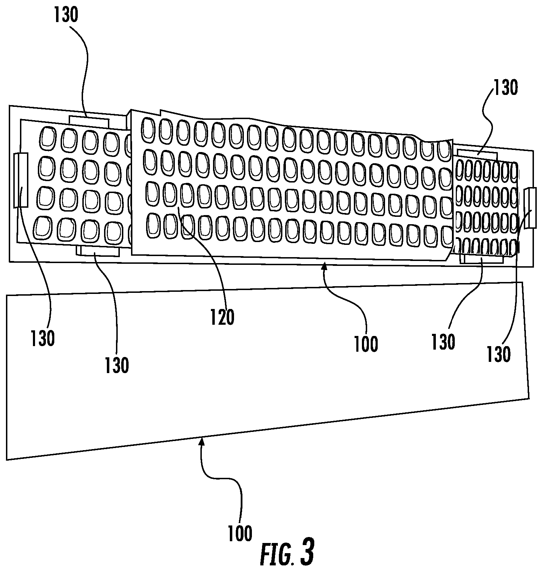

In addition, in some embodiments, the fixture is a load bar or a piece of molding. A "load bar," as referenced herein, can be a beam, bar or other structure having a similar configuration. Further, a load bar can be configured or adapted to carry a load, such as in the case of picture frames, artwork or other wall hangings which may be suspended from the load bar. In certain other embodiments, the load bar does not serve a load bearing or wall-hanging function. Figure 3 illustrates a view of the front (bottom image) and a view of the back (top image) of a fixture (100) described herein wherein the fixture (100) is a load bar. As illustrated in Figure 3, the fixture (100) comprises PCM (120) disposed on the back side and a plurality of spacers (130) positioned at various points around a periphery of the fixture (100) in order to define an air flow channel between the PCM (120) and the interior of the room upon installation (such as by defining a space between the back side of the fixture and a wall of the room). In addition to embodiments wherein the fixture is a load bar, the fixture can also be a piece of molding. Any type of molding can be used consistent with the objectives of the present disclosure. For example, crown molding or picture molding can be used.

In certain embodiments, the load bar or molding may have particular dimensions. For example, in some embodiments, a length of the load bar or molding is between about 0.6 m (2 feet) and about 3.7 m (12 feet), such as between about 0.6 m (2 feet) and about 1.8 m (6 feet), between about 0.9 m (3 feet) and about 1.5 m (5 feet), between about 0.9 m (3 feet) and about 1.8 m (6 feet), between about 0.9 m (3 feet) and about 2.3 m (8 feet), between about 1.2 m (4 feet) and about 1.8 m (6 feet), between about 0.6 m (2 feet) and about 1.5 m (5 feet), or between about 0.6 m (2 feet) and about 1.2 m (4 feet). A width of the load bar or molding can be between about 15.24 cm (6 inches) and about 45.72 cm (18 inches), such as between about 20.32 cm (8 inches) and about 40.64 cm (16 inches), between about 25.4 cm (10 inches) and about 35.56 cm (14 inches), between about 15.24 cm (6 inches) and about 40.64 cm (16 inches), between about 15.24 cm (6 inches) and about 35.56 cm (14 inches), between about 15.24 cm (6 inches) and about 30.48 cm (12 inches), between about 20.32 cm (8 inches) and about 45.72 cm (18 inches), between about 25.4 cm (10 inches) and about 45.72 cm (18 inches), or between about 30.48 cm (12 inches) and about 45.72 cm (18 inches). In addition, a load bar or piece of molding can be disposed at a particular distance from the ceiling of the room. For example, in some embodiments, a top surface or top edge of the load bar or molding can be disposed between about 15.24 cm (6 inches) and about 76.2 cm (30 inches) below the ceiling, such as between about 22.86 cm (9 inches) and about 76.2 cm (30 inches), between about 30.48 cm (12 inches) and about 76.30 cm (30 inches), between about 45.72 cm (18 inches) and about 76.2 cm (30 inches), or between about 60.96 cm (24 inches) and about 76.2 cm (30 inches) from the ceiling. Further, in some embodiments, the load bar or molding is disposed between about 15.24 cm (6 inches) and about 60.96 cm (24 inches) from the ceiling, such as between about 15.24 cm (6 inches) and about 50.8 cm (20 inches), between about 15.24 cm (6 inches) and about 45.72 cm (18 inches), or between about 15.24 cm (6 inches) and about 30.48 cm (12 inches) below the ceiling. A load bar or piece of molding can comprise or include artwork or other decorative designs. Any artwork or decorative design not inconsistent with the objectives of the present invention can be used. For example, painting, decals, sculpture, wall-hangings or the like can be used. In certain other embodiments, the load bar or molding does not comprise artwork.

Further, in some embodiments, the fixture is suspended from the ceiling of the room. For example, in some embodiments, the fixture can take the form of a drop ceiling or a drop sub-ceiling suspended from a drop ceiling. In some cases, a fixture described herein is a ceiling tile or a portion of a ceiling tile, such as a drop ceiling tile. In some such embodiments, the fixture is used in place of one or more normal ceiling tiles that would otherwise be used in the room, where a "normal" ceiling tile is understood to refer to a ceiling tile that is not a fixture described herein. In certain other embodiments, the fixture can be decorative or otherwise ornamental instead of being disposed in a drop-ceiling configuration. As in the case of the load bar or piece of molding, the top surface of such a fixture can be disposed at a particular distance from the ceiling. For example, in some embodiments, a top surface or top edge of the fixture can be disposed between about 15.24 cm (6 inches) and about 76.2 cm (30 inches) below the ceiling, such as between about 22.86 cm (9 inches) and about 76.2 cm (30 inches), between about 30.48 cm (12 inches) and about 76.2 cm (30 inches), between about 45.72 cm (18 inches) and about 76.20 cm (30 inches), or between about 60.96 cm (24 inches) and about 76.20 cm (30 inches) from the ceiling. Further, in some embodiments, the top surface of the fixture is disposed between about 15.24 cm (6 inches) and about 60.96 cm (24 inches) from the ceiling, such as between about 15.24 cm (6 inches) and about 50.80 cm (20 inches), between about 15.24 cm (6 inches) and about 45.72 cm (18 inches), or between about 15.24 cm (6 inches) and about 30.48 cm (12 inches) below the ceiling.

Further, in some instances, a fixture described herein is an acoustic tile or part of an acoustic tile. Such an acoustic tile, in some cases, exhibits a Noise Reduction Coefficient (NRC) corresponding to at least a 40 percent absorption rate, at least a 50 percent absorption rate, or at least a 60 percent absorption rate. In some embodiments, an acoustic tile described herein has an NRC corresponding to a 40 to 90 percent absorption rate, 40 to 80 percent absorption rate, 50 to 85 percent absorption rate, 50 to 80 percent absorption rate, 50 to 60 percent absorption rate, 60 to 80 percent absorption rate, 60 to 70 percent absorption rate, or 70 to 80 percent absorption rate.

A fixture utilized in a method described herein can be disposed or provided at one or more locations within the room in order to adapt or adjust temperature management to a particular room setup or configuration. For example, in some embodiments, the fixture is disposed proximate to a heat source. "Proximate," for reference purposes herein, can refer to an effective distance from the heat source. For example, a fixture disposed proximate a heat source can be less than 1.8 m (6 feet) from the heat source, such as less than about 0.9 m (3 feet) from the heat source. A fixture can be disposed between about 15.24 cm (6 inches) and about 1.5 m (5 feet) from the heat source, between about 15.24 cm (6 inches) and about 1.2 m (4 feet) from the heat source, between about 15.24 cm (6 inches) and about 0.9 m (3 feet) from the heat source, or between about 15.24 cm (6 inches) and about 0.6 m (2 feet) from the heat source. Moreover, the fixture can be disposed less than 15.24 cm (6 inches) from the heat source, including embodiments wherein the fixture is between about 1.27 cm (0.5 inches) and about 15.24 cm (6 inches) from the heat source. Not intending to be bound by theory, it is believed that placement of the fixture proximate or near a heat source can facilitate a temperature change buffer effect provided by the PCM disposed on or within the fixture. A "heat source," for reference purposes herein, can be any source of heat or thermal energy. For example, the heat source can be an appliance such as a television, refrigerator, or toaster, an HVAC vent, a light bulb or fixture, a window, or a combination thereof. The heat source may also be associated with an occupant of the room or occupancy of the room by humans more generally. For instance, in some cases, a heat source can be a high traffic or high occupancy area or volume of the room, such as a corridor of the room or another region of the room in which human occupants are relatively likely to be present. Moreover, in some embodiments, the fixture can be disposed on an upper half of a wall of the room. Further, in some embodiments, the fixture can be disposed on an upper quarter of the wall. Not intending to be bound by theory, it is believed that such placement can facilitate energy absorption by the PCM as a result of proximity of the PCM to the warmer air which may rise to the upper half of the room.

Additionally, in some embodiments, it may be desirable to provide a particular amount of PCM for a given thermal capacity or thermal load for a given room. In some embodiments, the thermal capacity or thermal load of a room can be related to one or more factors including the square footage (or, more generally, the area) of floor space of a room, the cubic footage (or, more generally, the volume) of the room or of temperature-managed air in the room, the number of heat sources in the room, or other factors which may impact the thermal capacity of the room. In some embodiments, this amount of PCM may be expressed as a particular ratio of an amount of PCM to a floor area or an air volume of the room (which may be referred to as a "room density" of the PCM). An amount of PCM may also be expressed as a particular ratio of amount of PCM to fixture area or fixture volume (which may be referred to as a "fixture density" of the PCM). Moreover, an amount of PCM disposed within the room or within the fixture can, in some embodiments, be selected which corresponds to a heat capacity of the room or to a desired number of PCM phase transitions that occur within a single "charging-discharging" cycle of the fixture or PCM of the fixture. A "charging-discharging cycle," for reference purposes herein, includes the steps of using a phase transition (e.g., a solid-to-liquid or solid-to-gel phase transition) of the PCM of a fixture described herein to absorb heat from (or release heat to) a room in a first direction of temperature change, and then subsequently using the opposite phase transition (e.g., a liquid-to-solid or gel-to-solid phase transition) of the PCM to release heat to (or absorb heat from) the room . For example, in an embodiment wherein a room has an average ceiling height from the floor of between about 2.4 m (8 feet) and about 3.0 m (10 feet), such as may be the case in a hotel room, an effective or preferred amount of PCM can be selected based on the thermal capacity of the room as determined by square footage of the room and/or based on a desired degree of charging or discharging required of the PCM in view of the thermal capacity of the room or a desired increase or decrease of temperature within the room.

In some embodiments, for example, an amount of PCM disposed within the room is between about 0.34 kPa (0.05 lbs.) and 1.03 kPa (0.15 lbs. per square foot) of floor space in the room, such as between about 0.41 kPa (0.06 lbs.) and about 1.03 kPa (0.15 lbs. per square foot, between about 0.07 lbs. and about 1.03 kPa (0.15 lbs. per square foot), between about 0.0038 kPa (0.08 lbs.) and about 1.03 kPa (0.15 lbs. per square foot, or between about 0.0043 kPa (0.09 lbs.) and about 1.03 kPa (0.15 lbs. per square foot) of floor space in the room. Additionally, in some embodiments, an amount of PCM disposed within the room is between about 0.0023 kPa (0.05 lbs.) and about 0.0067 kPa (0.14 lbs. per square foot) of floor space in the room, between about 0.0023 kPa (0.05 lbs.) and about 0.0062 kPa (0.13 lbs. per square foot), or between about 0.0023 kPa (0.05 lbs.) and about 0.0057 kPa (0.12 lbs. per square foot) of floor space in the room. Moreover, in some embodiments, an amount of PCM disposed within a room is between about 1.03 kPa (0.15 lbs.) and about 0.0168 kPa (0.35 lbs. per square foot) of floor space in the room, such as between about 0.0096 kPa (0.2 lbs.) and about 0.0144 kPa (0.3 lbs. per square foot), between about 0.0120 kPa (0.25 lbs.) and about 0.0144 kPa (0.3 lbs. per square foot), between about 1.03 kPa (0.15 lbs. and about 0.0120 kPa (0.25 lbs. per square foot), or between about 0.0072 (0.15 lbs.) and about 0.0096 kPa (0.2 lbs. per square foot) of floor space in the room. In other embodiments, an amount of PCM disposed within a fixture is between about 0.0096 kPa (0.2 lbs.) and 0.0431 kPa (0.9 lbs. per square foot) of the fixture, between about 0.0144 kPa (0.3 lbs.) and 0.0383 kPa (0.8 lbs. per square foot) of the fixture, or between about 0.0158 kPa (0.33 lbs.) and 0.0359 kPa (0.75 lbs. per square foot) of the fixture, where the area "of the fixture" is the largest cross-sectional area of the fixture (such that, e.g., a rectangular fixture having an average length *l*, an average width w*,* and an average thickness or height *h* would have an "area" corresponding to the greatest of *lw*, *lh*, and *wh*)*.*

In some cases, the use of between about 1.03 kPa (0.15 lbs.) and about 0.0168 kPa (0.35 lbs. of PCM per square foot) of floor space of the room (assuming a ceiling height of 2.4 to 3.0 m (8-10 feet)) and/or the use of between about 0.0158 kPa (0.33 lbs.) and about 0.0359 kPa (0.75 lbs. of PCM per square foot of the fixture is especially preferred, particularly when the PCM has a phase transition enthalpy between about 100 kJ/kg and about 220 kJ/kg.

Additionally, in some embodiments, the total square footage (or, more generally, the total area) of the PCM-containing fixtures used in a room can be selected based on the use of PCM in an amount described above. For example, in some cases, the total square footage (or area) of fixtures used in a room according to an embodiment described herein is determined according to Equation (1): $Total Fixture Area = \frac{R \times C \times O}{M}$ (1), where *R* is the area (e.g., square footage) of the floor space of the room, *C* is the average ceiling height (e.g., in feet) of the room, *O* is a PCM room density factor, and *M* is a PCM fixture density factor. In general, the PCM room density factor *O* is obtained by converting a room density value above (such as 0.0072 kPa (0.15 lbs.) of PCM (per square foot) of floor space) into a PCM room density factor by dividing the room density value by 10. Thus, a room density value of 0.0072 kPa (0.15 lbs.) of PCM (per square foot) of floor space provides a room density factor *O* of 0.0072 kPa (0.015.) Further, the PCM room density factor *O* has units of "per length" (e.g., per foot). The PCM fixture density factor *M* is obtained by converting a fixture density value above (such as 5.17 kPa (0.75 lbs.) of PCM (per square foot) of fixture) into a unitless PCM fixture density factor by removing the units. Thus, a fixture density value of 5.17 kPa (0.75 lbs.) of PCM (per square foot) of fixture provides a fixture density factor *M* of 0.75. It is further to be understood that the "Total Fixture Area" of Equation (1) corresponds to the sum of the areas of all fixtures used in the room. Thus, if a first fixture having dimensions of 0.61 m (2 ft.) x 0.91 m (3 ft.), a second fixture having dimensions of 1.22 m (4 ft.) x 1.52 m (5 ft.), and a third fixture having dimensions of 1.83 m (6 ft.) x 0.91 m (3 ft.) are all used in the room, then the total fixture area would be 4.09 sq. m. (44 sq. ft.) (0.56 sq. m. (6 sq. ft.) + 1.86 sq. m. (20 sq. ft.) + 1.67 sq. m. (18 sq. ft.)).

Surprisingly, it has been found that, in some instances, using too large a quantity of PCM in a room can increase the amount of energy necessary to manage the temperature of the room relative to smaller quantities. Similarly, using too little PCM can reduce the efficacy of methods described herein relative to an effective amount per unit of thermal capacity or thermal load. It has also been surprisingly found that, in some cases, using PCM that is too highly dispersed (that is, PCM in a physical form having too high of a total surface to volume ratio or total surface area to weight ratio), or that is not dispersed enough, can further reduce the efficacy of methods described herein. For HVAC/mechanically controlled environments or rooms, the temperature of intake air (air entering the room) is typically about 12.8 °C (55°F) (for cooling applications) or about 32.2 °C (90°F) (for heating applications). A typical set point or thermostat setting for such a room is about 21.1 °C (70°F). Therefore, there is typically a somewhat limited difference in temperature (ΔT) between the set point and the intake air temperature, corresponding to approximately 8 °C and 11 °C (15-20°F). It has surprisingly been discovered that, to most effectively use PCM to manage the temperature of a room (particularly a room whose temperature is regulated by an HVAC system), it is desired to provide a relatively large number of opportunities for "partial" PCM phase transitions during heating/cooling or charging/discharging cycles, where a "partial" PCM phase transition refers to a phase transition in which some but not all of a specific continuous portion of PCM undergoes a phase transition. For example, a "partial" PCM phase transition can occur when a discrete "plug" or "cube" of PCM weighing 10 g absorbs heat from a room and less than 10 g of the PCM, but more than 0 g of the PCM, undergoes a phase transition (e.g., melts) as a result of absorbing the heat. In some cases, only an outer portion or "skin" of a plug or portion of PCM undergoes a phase transition. Such an outer portion or "skin," in some embodiments, comprises up to 50 percent, up to 40 percent, up to 30 percent, up to 20 percent, up to 15 percent, up to 10 percent, or up to 5 percent of the total volume or mass of the plug or portion of PCM. In some instances, the outer portion or skin of the discrete plug of PCM comprises 1-50 percent, 1-40 percent, 1-30 percent, 1-20 percent, 1-10 percent, 1-5 percent, 5-50 percent, 5-40 percent, 5-30 percent, 5-20 percent, 5-10 percent, 10-50 percent, 10-40 percent, 10-30 percent, 10-20 percent, 15-50 percent, 15-40 percent, 15-30 percent, 20-50 percent, 20-40 percent, or 20-30 percent of the total volume or mass of the discrete plug of PCM. The number of opportunities for such partial PCM phase transitions can be at least partially controlled by combining a room density of PCM and/or a fixture density of PCM described herein with a desired ΔT. As described above, it has been surprisingly discovered that the use of between about 0.0071 kPa (0.15 lbs.) and about 0.01676 kPa (0.35 lbs.) of PCM (per square foot) of floor space of the room (assuming a ceiling height of 2.4 to 3.0 m (8-10 feet)) and/or the use of between about 0.0158 kPa (0.33 lbs.) and about 0.0359 kPa (0.75 lbs.) of PCM (per square foot) of the fixture is especially preferred, particularly when the PCM has a phase transition enthalpy between about 100 kJ/kg and about 220 kJ/kg, and particularly for a desired or typical ΔT of 8 to 11 °C (15-20°F). Using PCM that is too dispersed or that has too low of a fixture density (e.g., such that the PCM is very thinly distributed within the fixture area) and/or that has too low of a room density can provide a total latent heat within the room that is too low to provide a meaningful effect when the difference between a desired temperature or set point of the room and the actual temperature of the room is relatively high (e.g., greater than 13.9 °C (25°F) or greater than 16.7 °C (30°F)), such as may occur when the HVAC system is off or entirely missing, when power is lost, or when the room is unoccupied or unused. Similarly, using PCM that has too high of a fixture density or too high of a room density can result in impossible, impractical, or energetically inefficient "recharging" of the entirety of the PCM (where "recharging" refers to reversing a phase transition of the PCM such that the PCM is ready to be used again to heat or cool the room), as described further hereinbelow.

Moreover, as described above, a method described herein can further comprise changing the phase of the PCM from a first phase to a second phase by exposing the PCM to a temperature in the room above (or below) a phase change temperature of the PCM. Additionally, in some instances, the method can further comprise reverting or returning the PCM to the first phase. The first phase and the second phase may be selected from any of the phases or mesophases described hereinabove. Additionally, the PCM can be reverted or returned to the first phase in any manner not inconsistent with the objectives of the present disclosure. For example, in some cases, reverting the PCM to the first phase comprises cooling (or heating) the room naturally, such as by exposing the room to the outdoors or to a day-night cycle. Not intending to be bound by theory, it is believed that the presence of the PCM-containing fixture in the room during such a day-night cycle (or plurality of cycles) can help maintain the temperature of the room at a more constant, less varying level, with or without the use of an HVAC system or thermostat in the room. Thus, in some embodiments, a method described herein can improve the average temperature and/or the human habitability of a room lacking an HVAC system or a room having an HVAC system with a thermostat set point that is warmer (or colder) than the usual seasonal comfort level for the room. Such a method may be particularly useful for unoccupied hotel rooms.

In other embodiments, reverting the PCM to the first phase comprises cooling (or heating) the room with an HVAC system. In such an instance, the presence of the PCM-containing fixture in the room can help reduce the number of on-off or activation-deactivation cycles of the HVAC system needed to maintain the temperature of the room at a given thermostat set point. Thus, in some cases, a method described herein can further comprise reducing a number of heating cycles or cooling cycles required to maintain a constant predetermined or desired temperature range in the interior of the room. Alternatively or additionally, a method described herein can also comprise shortening the heating or cooling cycles required to maintain the predetermined or desired temperature range. "Shortening" a heating or cooling cycle, for reference purposes herein, refers to decreasing the difference between a lowermost temperature during the cycle and an uppermost temperature of the cycle. Surprisingly, it has been found that an overall energy savings can be realized by such a method, despite the need, in some cases, to use the HVAC system to expend additional energy to "recharge" or revert the PCM back to a first phase following a phase change transitions of the PCM.

It is to be understood that fixtures and methods described herein can be used to help maintain a desired temperature or range of temperatures in any type of room or space not inconsistent with the objectives of the present disclosure. For example, in some cases, a fixture and/or method described herein may be used in a residence, a hotel room, an office, a restaurant dining area, a restaurant kitchen or food preparation area, a supermarket, a grocery store or other store, a school, a classroom, a conference room, or a lobby. A fixture and/or method described herein may also be used in a data room or data center. Non-limiting examples of specific uses of a fixture and/or method described herein include using a fixture described herein as a banner or menu board in or above a restaurant food preparation area; using a fixture described herein as artwork in a restaurant dining area; using a fixture described herein as a display board or advertisement board in a supermarket; using a fixture described herein as artwork, molding, or a load bar in a hotel room; and using a fixture described herein as a smart board or other board in a classroom, conference room, or lobby. Other uses are also possible.

Some embodiments described herein are further illustrated in the following non-limiting example.

### EXAMPLE

### Methods of Managing the Temperature of a Room

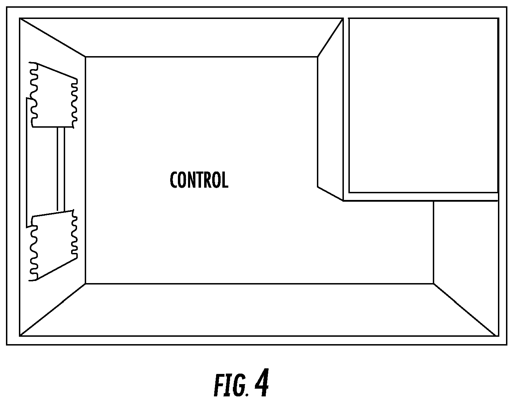

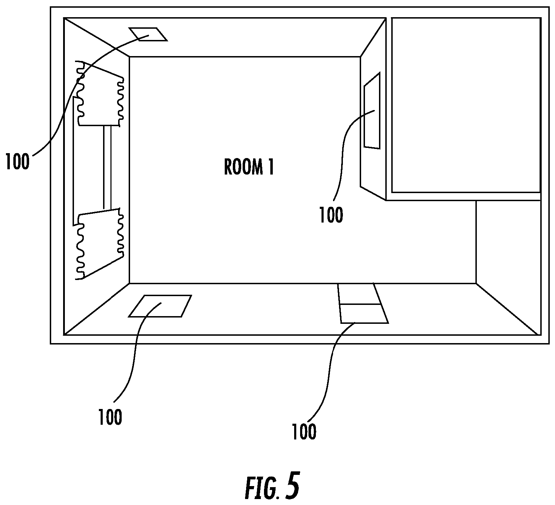

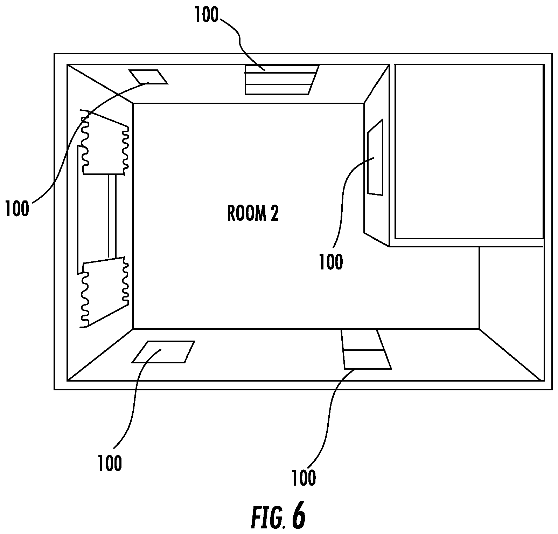

Three rooms of substantially the same size were selected in a commercial hotel. In each of the rooms, either no fixtures comprising a PCM were disposed therein (control) or a varied configuration of fixtures comprising PCM were disposed therein. Figure 4 illustrates a control configuration in which the room was left devoid of fixtures comprising PCM. Figure 5 illustrates Room 1 having a variety of fixtures (100) disposed therein containing a total of about 16.33 kg (36 pounds) of PCM disposed throughout the 37.16 square metre (400 square foot) room. Figure 6 illustrates Room 2 having a differing configuration of a variety of fixtures (100) disposed therein containing a total of about 20.31 kg (45 pounds) of PCM disposed throughout the 37.16 square metre (400 square foot) room. Table I below provides the fixtures and total square footage of PCM placed on or within the fixtures in Room 1. Table II below provides the fixtures and total square footage of PCM placed on or within the fixtures in Room 2. It is to be understood that 4.46 square metre (48 square feet) of PCM corresponded to 16.33 kg (36 lbs.) of PCM, and 5.57 square metre (60 square feet) of PCM corresponded to 20.41 kg (45 lbs.) of PCM. Figures 1 and 2 illustrate the PCM configurations utilized in the fixtures disposed in each of Rooms 1 and 2.

**Table I. Fixtures in Room 1**

| **Fixture** | **Width in m (ft.) of Fixture** | **Length in m (ft.) of Fixture** | **Square Metres (Square Feet) of PCM** |
|---|---|---|---|
| Mirror (Large) | 0.91 (3) | 0.91 (3) | 0.83 (9) |
| Mirror (Small) | 0.61 (2) | 0.91 (3) | 0.56 (6) |
| Glass Artwork (Large) | 0.91 (3) | 1.52 (5) | 1.38 (15) |
| Glass Artwork (Small) | 0.91 (3) | 0.91 (3) | 0.83 (9) |
| Mirror (Large) | 0.91 (3) | 0.91 (3) | 0.83 (9) |
| Total Metres (Feet) | | | 4.43 (48) |

**Table II. Fixtures in Room 2**

| **Fixture** | **Width in m (ft.) of Fixture** | **Length in m (ft.) of Fixture** | **Square Metres (Square Feet) of PCM** |
|---|---|---|---|
| Mirror (Large) | 0.91 (3) | 0.91 (3) | 0.83 (9) |
| Mirror (Large) | 0.91 (3) | 0.91 (3) | 0.83(9) |
| Mirror (Large) | 0.91 (3) | 0.91 (3) | 0.83 (9) |
| Glass Artwork (Large) | 0.91 (3) | 1.52 (5) | 1.38 (15) |
| Glass Artwork (Small) | 0.91 (3) | 0.91 (3) | 0.83 (9) |
| Load Bar | 0.30 (1) | 1.22 (4) | 0.37 (4) |
| Load Bar | 0.30 (1) | 1.22 (4) | 0.37 (4) |
| Load Bar | 0.301 | 1.22 (4) | 0.37 (4) |
| Total Metres (Feet) | | | 5.81 (63) |

Each of the three rooms was maintained in this configuration over a 7 day period. The actual high temperature, low temperature, and cloud cover experienced at the commercial hotel for each of the 7 days is provided below in Table III.

**Table III. Weather Conditions**

| **Day** | **High °C (°F)** | **Low °C (°F)** | **Cloud Conditions** |
|---|---|---|---|
| 1 | 28.9 (84) | 17.8 (64) | Scattered Clouds |
| 2 | 28.3 (83) | 16.7 (62) | Scattered Clouds |
| 3 | 30 (86) | 20 (68) | Rain |
| 4 | 30 (86) | 19.4 (67) | Rain |
| 5 | 26.7 (80) | 17.8 (64) | Rain |
| 6 | 18.3 (65) | 16.1 (61) | Mostly Cloudy |
| 7 | 20 (68) | 15 (59) | Overcast |

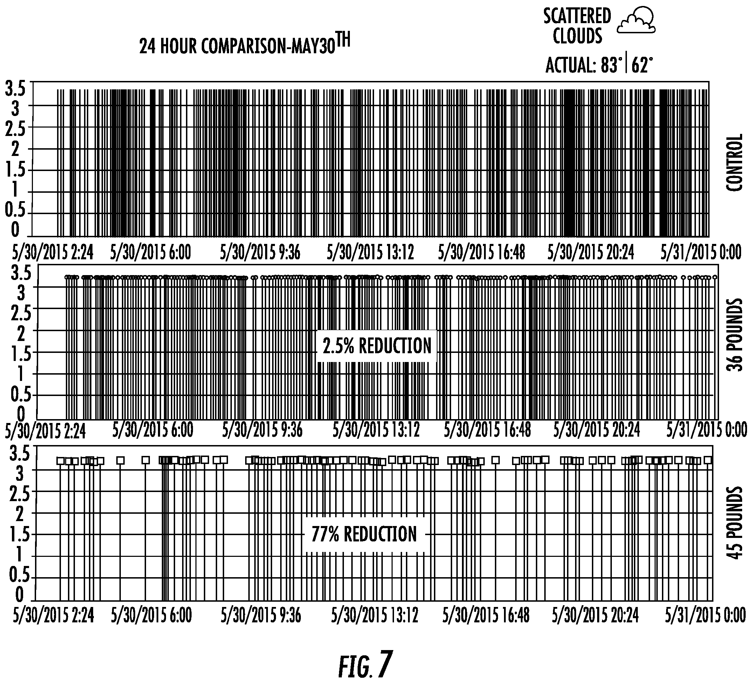

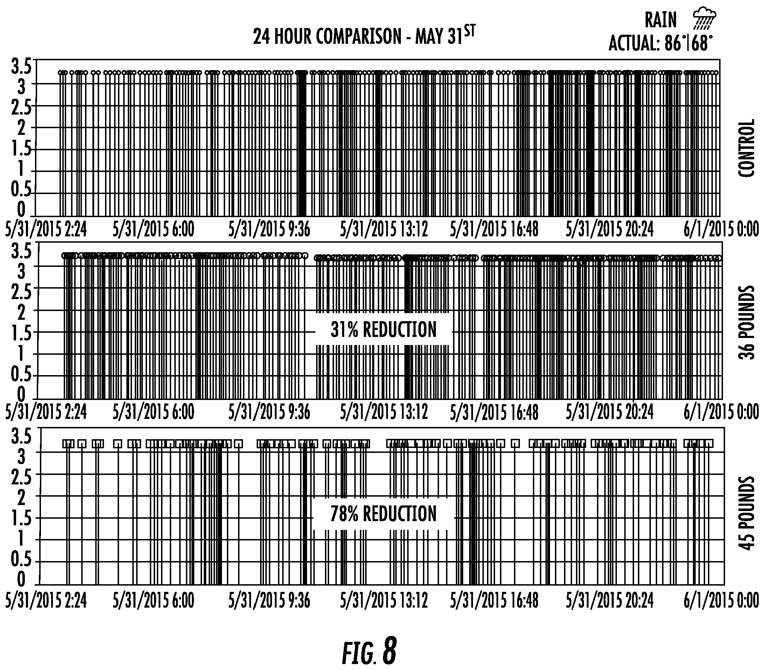

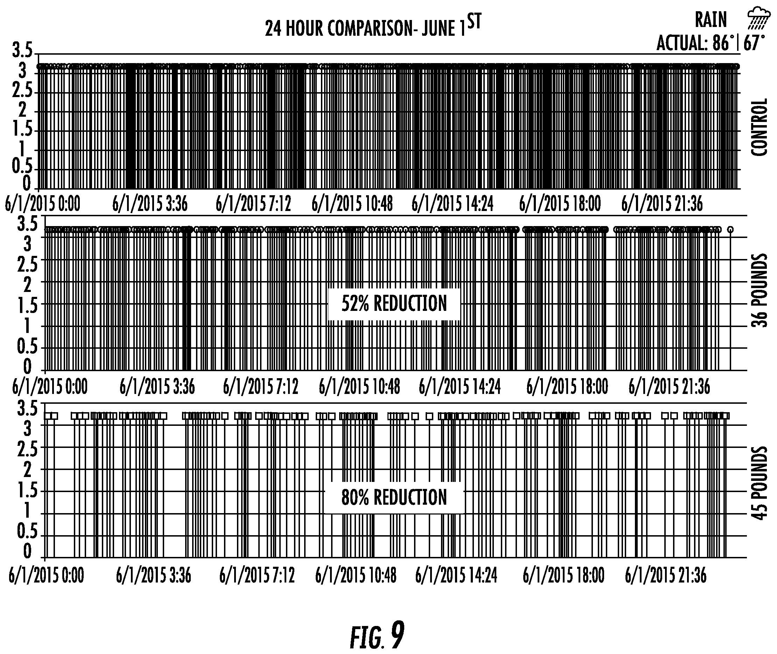

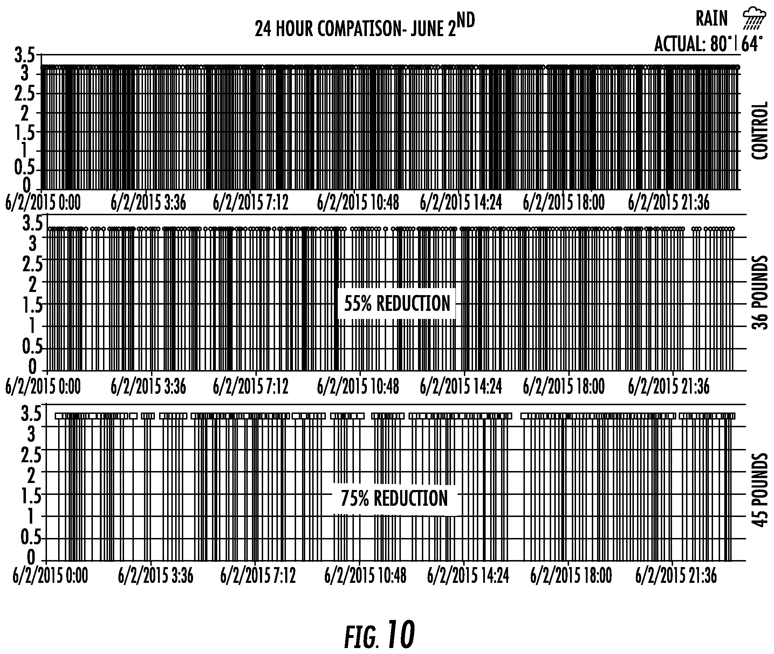

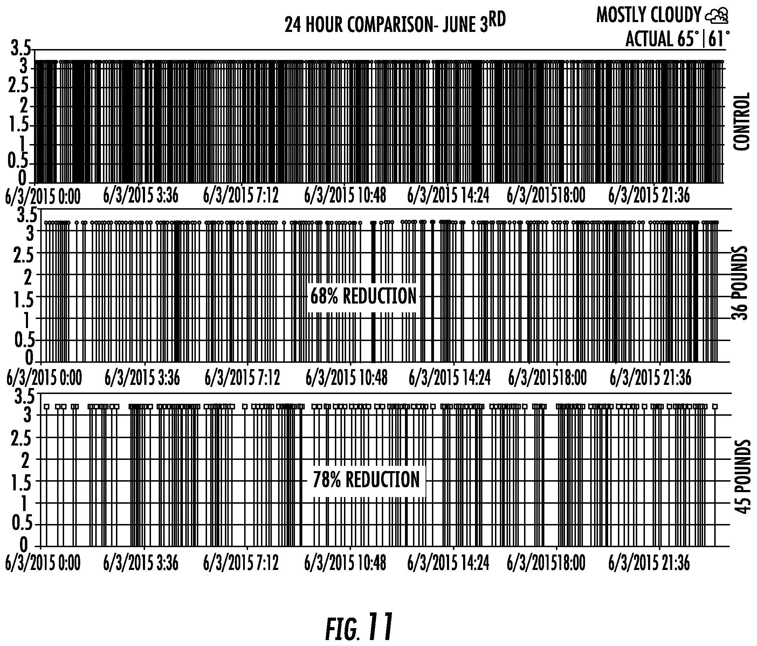

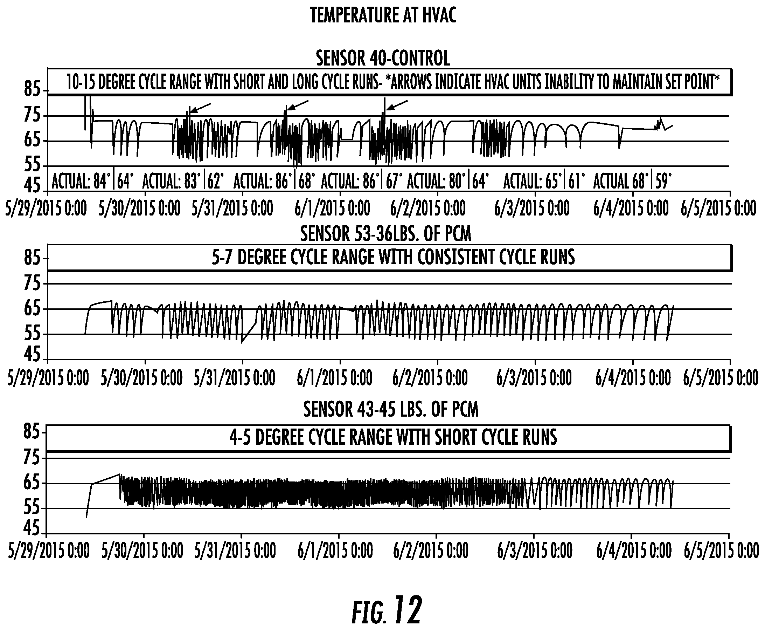

During the 7 day test period, the run time of the HVAC system to maintain a set point of 21.1 °C (70°F) was measured. In the control room, the HVAC system ran for a measured time of 38.7 hours over the test period, utilizing a calculated energy of 27.2 kWh. The same system ran in Room 1 for 21.7 hours over the test period, using a calculated amount of energy of 15.3 kWh, a 43.8% reduction compared to the control. The HVAC system of Room 2 ran for a measured time of 8.8 hours over the test period, utilizing a calculated energy of 6.2 kWh, a 77% reduction compared to the control. Figures 7-12 illustrate additional results of the test, including on-off times for the three rooms.

## Claims

1. A method of managing the temperature of a room having a wall, a floor, and a ceiling, the method comprising:
disposing a fixture (100) comprising a phase change material (120) in an interior of the room, wherein the phase change material (120) is provided in an amount between 0.73 and 1.71 kg per square meter (between 0.15 lbs. and 0.35 lbs. per square foot) of floor space in the interior of the room and wherein the fixture (100) provides structure or subdivision to a room,
wherein the temperature of the room is regulated by a heating, ventilating and air conditioning (HVAC) system,
wherein the room has an average ceiling height from the floor of between 2.4 meters and 3.0 meters (between 8 feet and 10 feet),
wherein the room has an intake air temperature,
wherein the room has a set point temperature,
wherein the difference between the intake air temperature and the set point temperature of the room (ΔT) is between 8°C and 11°C (between 15°F and 20°F),
wherein the phase change material (120) has a phase transition enthalpy between about 50 kJ/kg and about 350 kJ/kg, and
wherein the phase change material (120) has a phase transition temperature at or near a desired set-point temperature of an interior of the room.

2. The method of claim 1, wherein the fixture (100) forms a portion of an interior wall or ceiling; or wherein the fixture (100) is a ceiling tile or a portion of a ceiling tile; or wherein the fixture (100) is incorporated into a wall or ceiling of the room; or wherein the fixture (100) forms at least a portion of a cubicle or workstation wall or division within the room.

3. The method of claim 1, wherein:
the fixture (100) has a front side and a back side; and
the phase change material (120) is disposed on the back side of the fixture (100).

4. The method of claim 3. wherein the front side is formed of a breathable or a non-breathable material.

5. The method of any preceding claim, wherein the fixture (100) comprises a spacer (130) that defines an air flow channel that permits air flow from the interior of the room to the phase change material (120) and from the phase change material (120) to the interior of the room.

6. The method of any preceding claim, wherein the fixture (100) defines at least one vent hole that permits air flow from the interior of the room to the phase change material (120) and from the phase change material (120) to the interior of the room.

7. The method of any preceding claim, wherein the fixture (100) comprises at least one fan that directs air flow from the interior of the room to the phase change material (120) and from the phase change material (120) to the interior of the room.

8. The method of any preceding claim, wherein the fixture (100) is disposed proximate to a heat source.

9. The method of claim 8, wherein the heat source is an appliance, an HVAC vent, a light fixture, or a window.

10. The method of any preceding claim, wherein the phase change material (120) is provided in an amount between 1.61 and 3.66 kg per square meter (between 0.33 lbs. and 0.75 lbs. per square foot) of the fixture (100).

11. The method of any preceding claim further comprising:
changing the phase of the phase change material (120) from a first phase to a second phase by exposing the phase change material (120) to an ambient temperature in the room below a phase change temperature of the phase change material (120); and
reverting the phase change material (120) to the first phase by heating the room with the HVAC system of the room.

12. The method of any preceding claim further comprising:
changing the phase of the phase change material (120) from a first phase to a second phase by exposing the phase change material (120) to an ambient temperature of the room above a phase change temperature of the phase change material (120); and
reverting the phase change material (120) to the first phase by cooling the room with the HVAC system of the room.

13. The method of claim 11 or 12, wherein the HVAC system is activated or deactivated by a thermostat disposed within the interior of the room.

14. The method of claim 1, wherein the phase change material (120) has a phase transition enthalpy between about 100 kJ/kg and about 220 kJ/kg.

## Patentansprüche

1. Verfahren zum Verwalten der Temperatur eines Raums mit einer Wand, einem Boden und einer Decke, das Verfahren Folgendes umfassend:
Anordnen einer Halterung (100), die ein Phasenwechselmaterial (120) umfasst, in einem Inneren des Raums, wobei das Phasenwechselmaterial (120) in einer Menge zwischen 0,73 und 1,71 kg pro Quadratmeter (zwischen 0,15 lbs. und 0,35 lbs. pro Quadratfuß) der Bodenfläche im Inneren des Raums bereitgestellt ist und wobei die Halterung (100) einem Raum eine Struktur oder Unterteilung bereitstellt,
wobei die Temperatur des Raums durch ein Heiz-, Klimatisierungs- und Lüftungssystem (HKL-System) geregelt wird,
wobei der Raum eine durchschnittliche Deckenhöhe vom Boden aus zwischen 2,4 Meter und 3,0 Meter (zwischen 8 Fuß und 10 Fuß) aufweist,
wobei der Raum eine Ansauglufttemperatur aufweist,
wobei der Raum eine Solltemperatur aufweist,
wobei die Differenz zwischen der Ansauglufttemperatur und der Solltemperatur des Raums (ΔT) zwischen 8 °C und 11 °C (zwischen 15 °F und 20 °F) beträgt,
wobei das Phasenwechselmaterial (120) eine Phasenübergangsenthalpie zwischen etwa 50 kJ/kg und etwa 350 kJ/kg aufweist und
wobei das Phasenwechselmaterial (120) eine Phasenübergangstemperatur bei oder nahe einer gewünschten Solltemperatur eines Inneren des Raums aufweist.

2. Verfahren nach Anspruch 1, wobei die Halterung (100) einen Abschnitt einer Innenwand oder Decke bildet; oder wobei die Halterung (100) eine Deckenplatte oder ein Abschnitt einer Deckenplatte ist; oder wobei die Halterung (100) in eine Wand oder Decke des Raums einbezogen ist; oder wobei die Halterung (100) mindestens einen Abschnitt einer Wand einer Arbeitsnische oder einer Arbeitsplatzwand oder -Aufteilung innerhalb des Raums bildet.

3. Verfahren nach Anspruch 1, wobei:
die Halterung (100) eine Vorderseite und eine Rückseite aufweist; und
das Phasenwechselmaterial (120) auf der Rückseite der Halterung (100) angeordnet ist.

4. Verfahren nach Anspruch 3, wobei die Vorderseite aus einem atmungsaktiven oder einem nicht atmungsaktiven Material gebildet ist.

5. Verfahren nach einem vorhergehenden Anspruch, wobei die Halterung (100) einen Abstandshalter (130) umfasst, der einen Luftströmungskanal definiert, der einen Luftstrom vom Inneren des Raums zum Phasenwechselmaterial (120) und vom Phasenwechselmaterial (120) zum Inneren des Raums ermöglicht.

6. Verfahren nach einem vorhergehenden Anspruch, wobei die Halterung (100) mindestens ein Lüftungsloch definiert, das einen Luftstrom vom Inneren des Raums zum Phasenwechselmaterial (120) und vom Phasenwechselmaterial (120) zum Inneren des Raums ermöglicht.

7. Verfahren nach einem vorhergehenden Anspruch, wobei die Halterung (100) mindestens ein Gebläse umfasst, das einen Luftstrom vom Inneren des Raums zum Phasenwechselmaterial (120) und vom Phasenwechselmaterial (120) zum Inneren des Raums leitet.

8. Verfahren nach einem vorhergehenden Anspruch, wobei die Halterung (100) nahe einer Wärmequelle angeordnet ist.

9. Verfahren nach Anspruch 8, wobei die Wärmequelle ein Gerät, eine HKL-Entlüftung, ein Beleuchtungskörper oder ein Fenster ist.

10. Verfahren nach einem vorhergehenden Anspruch, wobei das Phasenwechselmaterial (120) in einer Menge zwischen 1,61 und 3,66 kg pro Quadratmeter (zwischen 0,33 lbs. und 0,75 lbs. pro Quadratfuß) der Halterung (100) bereitgestellt wird.

11. Verfahren nach einem vorhergehenden Anspruch, ferner Folgendes umfassend:
Wechseln der Phase des Phasenwechselmaterials (120) von einer ersten Phase in eine zweite Phase, indem das Phasenwechselmaterial (120) einer Umgebungstemperatur in dem Raum unterhalb einer Phasenwechseltemperatur des Phasenwechselmaterials (120) ausgesetzt wird; und
Rückumwandeln des Phasenwechselmaterials (120) in die erste Phase durch Heizen des Raums mit dem HKL-System des Raums.

12. Verfahren nach einem vorhergehenden Anspruch, ferner Folgendes umfassend:
Wechseln der Phase des Phasenwechselmaterials (120) von einer ersten Phase in eine zweite Phase, indem das Phasenwechselmaterial (120) einer Umgebungstemperatur des Raums oberhalb einer Phasenwechseltemperatur des Phasenwechselmaterials (120) ausgesetzt wird; und
Rückumwandeln des Phasenwechselmaterials (120) in die erste Phase durch Kühlen des Raums mit dem HKL-System des Raums.

13. Verfahren nach Anspruch 11 oder 12, wobei das HLK-System durch einen Thermostat aktiviert oder deaktiviert wird, der innerhalb des Raums angeordnet ist.

14. Verfahren nach Anspruch 1, wobei das Phasenwechselmaterial (120) eine Phasenübergangsenthalpie zwischen etwa 100 kJ/kg und etwa 220 kJ/kg aufweist.

## Revendications

1. Procédé de gestion de la température d'une pièce ayant un mur, un sol et un plafond, le procédé comprenant :
disposer un dispositif (100) comprenant un matériau à changement de phase (120) à l'intérieur de la pièce, le matériau à changement de phase (120) étant fourni en une quantité comprise entre 0,73 et 1,71 kg par mètre carré (entre 0,15 livre et 0,35 livre par pied carré) d'espace au sol à l'intérieur de la pièce et le dispositif (100) fournissant une structure ou une subdivision à une pièce, dans lequel la température de la pièce est régulée par un système de chauffage, de ventilation et de climatisation (HVAC),
dans lequel la pièce a une hauteur moyenne sous plafond du sol comprise entre 2,4 mètres et 3,0 mètres (entre 8 pieds et 10 pieds),
la pièce ayant une température d'air d'admission,
la pièce ayant une température de consigne,
dans lequel la différence entre la température d'air d'admission et la température de consigne de la pièce (ΔT) est comprise entre 8 °C et 11 °C (entre 15 °F et 20 °F),
dans lequel le matériau à changement de phase (120) présente une enthalpie de transition de phase comprise entre environ 50 kJ/kg et environ 350 kJ/kg, et
le matériau à changement de phase (120) présente une température de transition de phase à une température de consigne souhaitée ou proche de celle-ci de l'intérieur de la pièce.

2. Procédé selon la revendication 1, dans lequel le dispositif (100) forme une partie d'un mur ou d'un plafond intérieur ; ou dans lequel le dispositif (100) est une tuile de plafond ou une partie d'une tuile de plafond ; ou dans lequel le dispositif (100) est incorporé dans un mur ou un plafond de la pièce ; ou dans lequel le dispositif (100) forme au moins une partie d'un mur d'une division d'un box ou d'une station de travail dans la pièce.

3. Procédé selon la revendication 1, dans lequel :
le dispositif (100) présente une face avant et une face arrière ; et
le matériau à changement de phase (120) est disposé sur la face arrière du dispositif (100).

4. Procédé selon la revendication 3, dans lequel la face avant est formée d'un matériau respirant ou non respirant.

5. Procédé selon l'une quelconque des revendications précédentes, dans lequel le dispositif (100) comprend une entretoise (130) qui définit un canal d'écoulement d'air qui permet un écoulement d'air depuis l'intérieur de la pièce vers le matériau à changement de phase (120) et depuis le matériau à changement de phase (120) vers l'intérieur de la pièce.

6. Procédé selon l'une quelconque des revendications précédentes, dans lequel le dispositif (100) définit au moins un trou d'évent qui permet l'écoulement d'air depuis l'intérieur de la pièce vers le matériau à changement de phase (120) et depuis le matériau à changement de phase (120) vers l'intérieur de la pièce.

7. Procédé selon l'une quelconque des revendications précédentes, dans lequel le dispositif (100) comprend au moins un ventilateur qui dirige l'écoulement d'air depuis l'intérieur de la pièce vers le matériau à changement de phase (120) et depuis le matériau à changement de phase (120) vers l'intérieur de la pièce.

8. Procédé selon l'une quelconque des revendications précédentes, dans lequel le dispositif (100) est disposé à proximité d'une source de chaleur.

9. Procédé selon la revendication 8, dans lequel la source de chaleur est un appareil, un évent HVAC, un luminaire ou une fenêtre.

10. Procédé selon l'une quelconque des revendications précédentes, dans lequel le matériau à changement de phase (120) est fourni en une quantité comprise entre 1,61 et 3,66 kg par mètre carré (entre 0,33 livre et 0,75 livre par pied carré) du dispositif (100).

11. Procédé selon l'une quelconque des revendications précédentes comprenant en outre :
changer la phase du matériau à changement de phase (120) d'une première phase à une seconde phase en exposant le matériau à changement de phase (120) à une température ambiante dans la pièce inférieure à une température de changement de phase du matériau à changement de phase (120) ; et
remettre le matériau à changement de phase (120) à la première phase en chauffant la pièce à l'aide du système HVAC de la pièce.

12. Procédé selon l'une quelconque des revendications précédentes comprenant en outre :
changer la phase du matériau à changement de phase (120) d'une première phase à une seconde phase en exposant le matériau à changement de phase (120) à une température ambiante de la pièce supérieure à une température de changement de phase du matériau à changement de phase (120) ; et
remettre le matériau à changement de phase (120) à la première phase en refroidissant la pièce avec le système HVAC de la pièce.

13. Procédé selon la revendication 11 ou 12, dans lequel le système HVAC est activé ou désactivé par un thermostat disposé à l'intérieur de la pièce.

14. Procédé selon la revendication 1, dans lequel le matériau à changement de phase (120) a une enthalpie de transition de phase comprise entre environ 100 kJ/kg et environ 220 kJ/kg.
